# FASCICULE DE BREVET EUROPEEN

(11) **EP 1 300 319 B1**
(45) Date de publication et mention de la délivrance du brevet: **03.05.2006**
(21) Numéro de dépôt: 02356189.7
(22) Date de dépôt: 30.09.2002
(51) Int. Cl.: B62D 3/12

(54) **Direction à crémaillère pour véhicule automobile**
Kraftfahrzeugzahnstangenlenkung
Rack-and-pinion steering gear for motor vehicle

(30) Priorité: 04.10.2001 FR 0112796
(43) Date de publication de la demande: 09.04.2003
(73) Titulaire: Société de Mécanique d'Irigny, 69540 Irigny (FR)
(72) Inventeur: Pantale, David, 69126 Brindas (FR)
(74) Mandataire: Bratel, Gérard

(56) Documents cités:
- DE-A- 19 917 392
- FR-A- 2 690 122

## Description

La présente invention concerne, de façon générale, les systèmes de direction pour véhicules automobiles. Elle se rapporte, plus particulièrement, aux directions à crémaillère, pourvues ou non d'un dispositif d'assistance. Encore plus spécialement, l'invention s'intéresse à un dispositif qui, pour ce genre de direction, assure un équilibrage entre les pressions d'air à l'intérieur de la direction et l'extérieur de celle-ci.

Une direction à crémaillère de véhicule automobile est habituellement réalisée de façon totalement étanche, afin d'éviter toute entrée indésirable d'eau ou d'humidité à l'intérieur de la direction. Ceci pose toutefois des problèmes de surpression ou de dépression dans la direction, en fonction de l'augmentation ou de la baisse de température environnante, la surpression ou dépression entraînant une déformation exagérée des soufflets de la direction, avec pour conséquence une détérioration ou destruction de ces soufflets.

Certes, il a été déjà envisagé de réaliser des directions avec soufflets "respirants", qui permettent l'entrée ou la sortie d'air. Toutefois, cette solution nécessite une fabrication spéciale, donc complexe et coûteuse, des soufflets -voir par exemple le document DE 199 17 392 A, figures 1 et 3).

Par ailleurs, si l'on considère la structure d'une direction à crémaillère, celle-ci comporte habituellement un carter de direction principal ou un tube, logeant la crémaillère qui y est montée coulissante. Ce carter ou tube, lui-même étanche, offre une communication interne entre les régions des soufflets droit et gauche, de sorte que l'air peut circuler d'un soufflet à l'autre par l'intérieur de la direction, selon les mouvements de cette direction, correspondant à la modification d'orientation des roues directrices du véhicule.

La présente invention a pour but de fournir une direction à crémaillère avec dispositif simple et économique d'équilibrage des pressions entre l'intérieur et l'extérieur de la direction, en vue d'éviter la déformation et la détérioration des soufflets, ce dispositif mettant à profit la structure du carter de la direction.

A cet effet, l'invention a pour objet une direction à crémaillère pour véhicule automobile, possédant un carter principal ou tube dans lequel est logée et peut coulisser la crémaillère, cette direction étant caractérisée essentiellement par le fait qu'il est prévu, en un point intermédiaire de son carter principal ou tube, un seul orifice débouchant sur l'extérieur, obturé par un élément réalisé, au moins partiellement, en une matière perméable à l'air mais hydrophobe, pour permettre l'équilibrage des pressions entre l'intérieur et l'extérieur de la direction, et éviter ainsi la déformation des soufflets de cette direction, en utilisant aussi la communication existante entre les deux soufflets.

Ainsi, l'idée à la base de l'invention consiste à prévoir, dans le carter ou tube de direction, un orifice non nécessaire au fonctionnement de base de la direction à crémaillère, cet orifice recevant un élément d'obturation empêchant le passage de l'eau et de l'humidité au travers dudit orifice, tout en permettant le passage de l'air. Ainsi, il est assuré un équilibrage permanent de pressions d'air entre l'intérieur et l'extérieur de la direction, en utilisant aussi la communication habituellement existante entre les deux soufflets de la direction. La solution proposée par l'invention est donc particulièrement simple et économique : un seul orifice de petite dimension doit être réalisé, par exemple par poinçonnage ou directement de fonderie, dans le carter ou le tube, cet orifice recevant un élément perméable à l'air et hydrophobe lui aussi de faible dimension, suffisant pour le passage de l'air, tandis que la structure des soufflets eux-mêmes reste habituelle et ne nécessite aucune adaptation particulière.

L'élément d'obturation perméable à l'air mais hydrophobe, placé dans ou sur l'orifice du carter ou du tube, peut se présenter comme une membrane, une pastille filtrante, un bouchon ou tampon ou similaire, fixé par tout moyen approprié, tel que collage, soudage, sertissage, encliquetage ou simple montage par pression. L'on dispose aussi d'un large choix pour la position de l'orifice et de cet élément d'obturation, sur la longueur du carter ou du tube de la direction.

L'élément d'obturation en matière perméable à l'air, mais hydrophobe peut être réalisé en polytétrafluoréthylène poreux, ou en toute autre matière équivalente, pouvant aussi se présenter comme une matière textile.

L'invention sera mieux comprise à l'aide de la description qui suit, en référence au dessin schématique annexé représentant, à titre d'exemples, deux formes d'exécution de cette direction à crémaillère pour véhicule automobile.
Figure 1 est une vue partielle extérieure, d'une direction assistée à crémaillère conforme à l'invention ;
Figure 2 est une vue de détail, en coupe, passant par l'orifice du tube et l'élément d'obturation de cet orifice;
Figure 3 est une vue similaire à figure 2, illustrant une variante de réalisation avec carter ;
Figure 4 est une vue en coupe transversale du carter de direction, illustrant une autre variante.

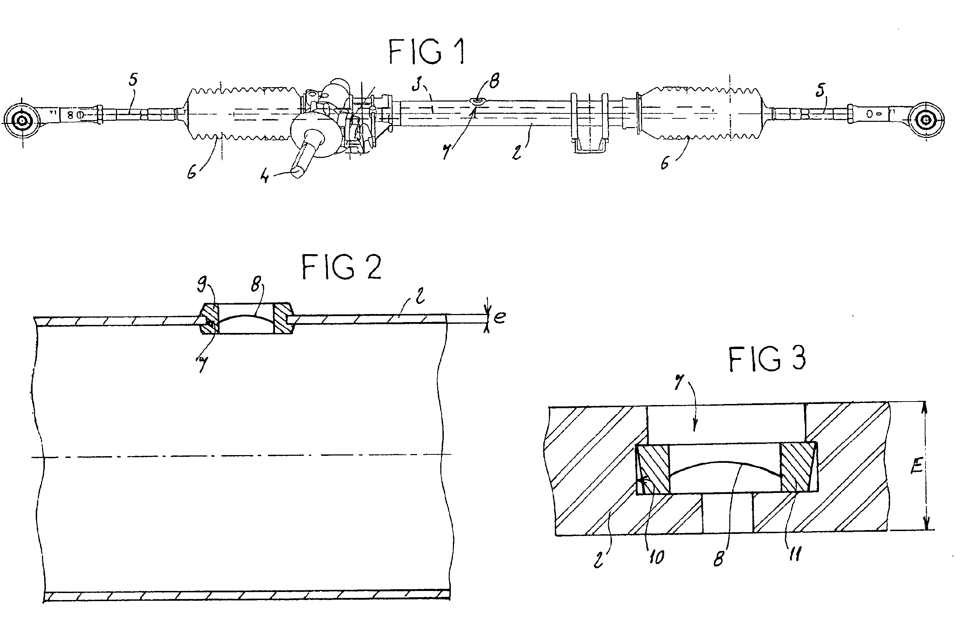

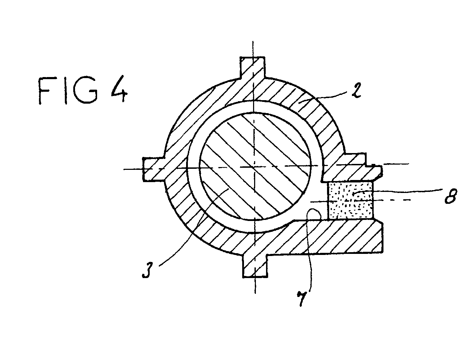

La figure 1 représente extérieurement une direction à crémaillère, qui dans l'exemple illustré est une direction manuelle. Cette figure montre plus particulièrement le tube ou carter central tubulaire 2 de la direction, dans lequel est montée coulissante la crémaillère 3. La crémaillère 3 est en prise avec un pignon rotatif, lié en rotation à la colonne de direction (non représentée), l'entrée du mouvement se faisant en 4.

Les extrémités droite et gauche de la crémaillère 3, extérieures au tube ou carter 2, sont accouplées à des biellettes 5. Deux soufflets 6, raccordés respectivement aux deux extrémités du tube ou carter 2, recouvrent et protègent les zones d'extrémité de la crémaillère 3, ainsi que partiellement les biellettes 5.

En se référant aussi aux figures 2 et 3, il est prévu, en un point intermédiaire de la longueur du tube ou du carter 2, un orifice 7 par exemple de forme circulaire. Dans ou sur l'orifice 7 est mis en place un élément d'obturation 8, réalisé en une matière perméable à l'air, mais hydrophobe, rendant possible le passage de l'air entre l'intérieur de la direction, notamment l'intérieur du tube ou du carter 2, d'une part, et l'extérieur, d'autre part. Selon les variations de température, l'air peut donc sortir de la direction ou y rentrer, de manière à équilibrer la pression entre l'intérieur de cette direction et l'extérieur, afin d'éviter la déformation des soufflets 6 et leur détérioration, notamment lorsque la température environnante augmente ou baisse fortement, le passage de l'eau et de l'humidité étant toutefois évité par la présence et la nature de l'élément 8.

Dans le détail, cet élément 8 perméable à l'air, mais hydrophobe, peut présenter l'allure d'une pastille filtrante ou d'une membrane, fixée sur le bord circulaire de l'orifice 7. Dans le cas de la figure 2, qui montre partiellement un tube 2 à paroi de relativement faible épaisseur e, l'orifice 7 reçoit par exemple une bague 9 retenue par pincement de part et d'autre de l'épaisseur du tube 2, la bague 9 servant elle-même de support à l'élément d'obturation 8 perméable à l'air, mais hydrophobe, ici du genre membrane.

La figure 3 illustre une variante, dans laquelle le carter tubulaire 2, par exemple réalisé en aluminium, possède une épaisseur E relativement importante. L'orifice 7 peut alors former, dans l'épaisseur même de la paroi du carter 2, un logement 10 qui reçoit une bague 11, servant elle-même de support à l'élément 8 perméable à l'air, mais hydrophobe, par exemple du genre membrane.

La figure 4 illustre une autre variante, encore avec un carter tubulaire 2 d'épaisseur relativement importante, dans lequel l'orifice 7 possède une orientation tangentielle, et reçoit un élément 8 perméable à l'air mais hydrophobe du genre tampon ou bouchon.

La matière constitutive de l'élément 8, perméable à l'air mais hydrophobe, peut être une résine polymérique fluorée poreuse, telle que celle commercialisée sous la dénomination « PERMEON » (marque enregistrée), ou toute autre matière équivalente.

L'invention est plus particulièrement applicable à une direction manuelle, ou à assistance électrique, dont le tube ou le carter 2 assure "naturellement" une communication entre les régions de deux soufflets 6, ce qui permet de placer l'orifice 7 et l'élément d'obturation 8 en un point quelconque de la longueur du tube ou du carter 2, ou à l'intérieur du carter dans le cas d'une direction assistée.

On ne s'éloignerait pas du cadre de l'invention, telle que définie dans les revendications annexées :
- en situant l'orifice 7, donc aussi l'élément d'obturation 8, en tout point de la longueur du tube ou du carter 2 ;
- en réalisant cet élément d'obturation 8 avec toutes formes et en toutes matières appropriées, et en le fixant par tout moyen ;
- en destinant le dispositif à des directions de tous types, manuelles ou assistées, avec tube ou carter réalisé en une ou plusieurs parties.

## Revendications

1. Direction à crémaillère pour véhicule automobile, possédant un carter principal ou tube (2) dans lequel est logée et peut coulisser la crémaillère (3), **caractérisée en ce qu'**il est prévu, en un point intermédiaire de son carter principal ou tube (2), un seul orifice (7) débouchant sur l'extérieur, obturé par un élément (8) réalisé, au moins partiellement, en une matière perméable à l'air mais hydrophobe, pour permettre l'équilibrage des pressions entre l'intérieur et l'extérieur de la direction, et éviter ainsi la déformation des soufflets (6) de cette direction, en utilisant aussi la communication existante entre les deux soufflets (6).

2. Direction à crémaillère selon la revendication 1, **caractérisée en ce que** l'élément d'obturation (8) en matière perméable à l'air mais hydrophobe, placé dans ou sur l'orifice (7) du carter ou du tube (2), se présente comme une membrane, une pastille filtrante, un bouchon ou tampon ou similaire.

3. Direction à crémaillère selon la revendication 2, **caractérisée en ce que** ledit orifice (7) du carter ou du tube (2) reçoit une bague (9 , 11), servant elle-même de support à l'élément d'obturation (8) perméable à l'air, mais hydrophobe, tel qu'un élément (8) du genre membrane.

4. Direction à crémaillère selon la revendication 3, **caractérisée en ce que** la bague (9), servant de support à l'élément d'obturation (8) perméable à l'air, mais hydrophobe, est retenue par pincement de part et d'autre de l'épaisseur du carter ou du tube (2), cette épaisseur (e) étant relativement faible.

5. Direction à crémaillère selon la revendication 3, **caractérisée en ce que** la bague (11), servant de support à l'élément d'obturation (8) perméable à l'air, mais hydrophobe, est reçue dans un logement (10) formé dans l'épaisseur de la paroi du carter ou du tube (2), cette épaisseur (E) étant relativement importante.

6. Direction à crémaillère selon l'une quelconque des revendications 1 à 5, **caractérisée en ce que** l'élément d'obturation (8) en matière perméable à l'air, mais hydrophobe, est réalisé en polytétrafluoréthylène poreux.

## Patentansprüche

1. Zahnstangenlenkung für Kraftfahrzeuge, die ein Hauptgehäuse oder Rohr (2) besitzt, in dem eine Zahnstange (3) untergebracht ist und gleiten kann,
**dadurch gekennzeichnet, dass**
an einem zur Mitte seines Hauptgehäuses oder Rohrs (2) hin gelegenen Punkt eine einzige, nach außen mündende Öffnung (7) vorgesehen ist, die durch ein Element (8) verschlossen ist, das zumindest teihveise aus einem luftdurchlässigen aber hydrophoben Material hergestellt ist, um den Ausgleich der Drücke zwischen dem Inneren und Äußeren der Lenkung zu ermöglichen und somit die Verformung der Balge (6) dieser Lenkung zu verhindern, wobei auch die bestehende Verbindung zwischen den beiden Balgen (6) genutzt wird.

2. Zahnstangenlenkung nach Anspruch 1,
**dadurch gekennzeichnet, dass**
das luftdurchlässige aber hydrophobe Verschlusselement (8), das in oder auf die Öffnung (7) des Gehäuses oder Rohrs (2) ein- bzw. aufgesetzt ist, sich als Membran, Filterplättchen, Stopfen oder Stöpsel oder dergleichen darstellt.

3. Zahnstangenlenkung nach Anspruch 2,
**dadurch gekennzeichnet, dass**
die Öffnung (7) des Gehäuses (2) einen Ring (9, 11) aufnimmt, der selbst als Auflage für das luftdurchlässige aber hydrophobe Verschlusselement (8) wie einem Element (8) von der Art einer Membran dient.

4. Zahnstangenlenkung nach Anspruch 3,
**dadurch gekennzeichnet, dass**
der Ring (9), der als Auflage für das luftdurchlässige aber hydrophobe Verschlusselement (8) dient, durch beidseitiges Aufquetschen auf die Dicke des Gehäuses oder Rohrs (2) gehalten ist, wobei diese Dicke (e) relativ gering ist.

5. Zahnstangenlenkung nach Anspruch 3,
**dadurch gekennzeichnet, dass**
der Ring (11), der als Auflage für das luftdurchlässige aber hydrophobe Verschlusselement (8) dient, in einer in der Dicke der Wand des Gehäuses oder Rohrs (2) ausgebildeten Aufnahme (10) aufgenommen ist, wobei diese Dicke (E) relativ groß ist.

6. Zahnstangenlenkung nach einem der Ansprüche 1 bis 5,
**dadurch gekennzeichnet, dass**
das luftdurchlässige aber hydrophobe Verschlusselement (8) aus porösem Polytetrafluorethylen hergestellt ist.

## Claims

1. Rack and pinion steering for motor vehicles, having a main casing or tube (2) in which the rack (3) is housed and can slide, **characterised in that** there is provided, at an intermediate point on its main casing or tube (2), a single orifice (7) opening to the outside, closed by an element (8) produced at least partially from a material permeable to air but hydrophobic, to allow balancing of the pressures between the inside and outside of the steering, and thus prevent the deformation of the boots (6) on this steering, also using the communication existing between the two boots (6).

2. Rack and pinion steering according to claim 1, **characterised in that** the closure element (8) made from material permeable to air but hydrophobic, placed in or on the orifice (7) in the casing or tube (2), is in the form of a membrane, a filtering slug, a stopper or plug or the like.

3. Rack and pinion steering according to claim 2, **characterised in that** the said orifice (7) in the casing or tube (2) receives a ring (9, 11) itself serving as a support for the closure element (8) permeable to air but hydrophobic, such as an element (8) of the membrane type.

4. Rack and pinion steering according to claim 3, **characterised in that** the ring (9) serving as a support for the closure element (8) permeable to air but hydrophobic is held by gripping on each side of the thickness of the casing or tube (2), this thickness (e) being relatively small.

5. Rack and pinion steering according to claim 3, **characterised in that** the ring (11) serving as a support for the closure element (8) permeable to air but hydrophobic is received in a housing (10) formed in the thickness of the wall of the casing or tube (2), this thickness (E) being relatively great.

6. Rack and pinion steering according to any one of claims 1 to 5, **characterised in that** the closure element (8) made from material permeable to air but hydrophobic is produced from porous polytetrafluoroethylene.
